(19) Europäisches Patentamt
European Patent Office
Office européen des brevets

(11) **EP 4 092 954 A1**

(12) # DEMANDE DE BREVET EUROPEEN

(43) Date de publication:
**23.11.2022  Bulletin 2022/47**

(21) Numéro de dépôt: **22174280.2**

(22) Date de dépôt: **19.05.2022**

(51) Classification Internationale des Brevets (IPC):
**H04L 9/30** *(2006.01)*        **H04L 9/08** *(2006.01)*

(52) Classification Coopérative des Brevets (CPC):
**H04L 9/0866; H04L 9/30**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité:  **20.05.2021  FR 2105268**

(71) Demandeur: **Idemia Identity & Security France
92400 Courbevoie (FR)**

(72) Inventeurs:
- **CHABANNE, Hervé
  92400 COURBEVOIE (FR)**
- **DESPIEGEL, Vincent
  92400 COURBEVOIE (FR)**

(74) Mandataire: **Regimbeau
20, rue de Chazelles
75847 Paris Cedex 17 (FR)**

(54)    **PROCEDE ET SYSTEME DE TRAITEMENT DE DONNEES BIOMETRIQUES**

(57)    L'invention propose un procédé de traitement de données personnelles, caractérisé en ce que qu'il comprend la mise en œuvre par un système (1) d'étapes de :

(a) Chiffrement fonctionnel d'une donnée personnelle candidate en utilisant une clé publique de chiffrement fonctionnel ;

(b) Pour au moins une donnée personnelle de référence, déchiffrement fonctionnel de la donnée biométrique candidate chiffrée en utilisant une clé privée de déchiffrement fonctionnel pour la fonction polynomiale de degré 1 ou 2 paramétrée avec ladite donnée personnelle de référence.

FIG. 1

**Description**

DOMAINE DE L'INVENTION

L'invention concerne un procédé de traitement de données personnelles, pour la comparaison entre une donnée personnelle candidate et au moins une donnée personnelle de référence.

ETAT DE LA TECHNIQUE

On connaît déjà des schémas d'identification ou d'authentification dans lesquels un utilisateur présente à une unité de traitement digne de confiance, par exemple à une unité appartenant à une douane, un aéroport, etc., une donnée biométrique fraîchement acquise sur l'utilisateur que l'unité confronte à une ou plusieurs donnée(s) biométrique(s) de référence enregistrée(s) dans une base de données à laquelle elle a accès.

Cette base de données regroupe les données biométriques de référence des individus autorisés (tels que les passagers d'un vol avant l'embarquement).

Une telle solution apporte satisfaction, mais pose le problème de la confidentialité de la base de données biométriques de référence pour garantir la vie privée des usagers. Il est ainsi obligatoire de chiffrer cette base de données.

Pour éviter toute manipulation en clair des données biométriques, on peut utiliser un chiffrement homomorphe et réaliser les traitements sur les données biométriques (typiquement calculs de distance) dans le domaine chiffré. Un système cryptographique homomorphe permet en effet d'effectuer certaines opérations mathématiques sur des données préalablement chiffrés au lieu des données en clair. Ainsi, pour un calcul donné, il devient possible de chiffrer les données, faire certains calculs associés audit calcul donné sur les données chiffrés, et les déchiffrer, en obtenant le même résultat que si l'on avait fait ledit calcul donné directement sur les données en clair.

Ainsi le dépositaire de la clé privée du système cryptographique homomorphe peut alors obtenir le résultat souhaité de l'identification ou authentification d'un individu.

Cependant, même si ce dépositaire est une entité de confiance, il a la capacité avec cette clé de déchiffrer les données biométriques, ce qui reste problématique.

En outre, le dépositaire peut réaliser des opérations mathématiques sur les données préalablement chiffrées, autres que celles auxquelles ont consenti les utilisateurs qui ont présenté leurs données biométriques.

Il serait ainsi souhaitable de disposer d'une solution simple, fiable, sécurisée, et totalement respectueuse de la vie privée, d'identification/authentification d'un individu.

PRESENTATION DE L'INVENTION

Selon un premier aspect, l'invention concerne un procédé de traitement de données personnelles, caractérisé en ce que qu'il comprend la mise en oeuvre par un système d'étapes de :

(a) Chiffrement fonctionnel d'une donnée personnelle candidate en utilisant une clé publique de chiffrement fonctionnel ;
(b) Pour au moins une donnée personnelle de référence, déchiffrement fonctionnel de la donnée biométrique candidate chiffrée en utilisant une clé privée de déchiffrement fonctionnel pour une fonction polynomiale de degré 1 ou 2 paramétrée avec ladite donnée personnelle de référence.

Selon des caractéristiques avantageuses et non-limitatives :
Ladite fonction polynomiale de degré 1 ou 2 paramétrée avec ladite donnée personnelle de référence est une fonction de distance avec ladite donnée personnelle de référence.

Le procédé comprend une étape (a0) de génération de ladite clé privée de déchiffrement fonctionnel pour ladite fonction polynomiale de degré 1 ou 2 paramétrée avec ladite donnée personnelle de référence, à partir d'une clé maitresse et de ladite donnée personnelle de référence.

Ladite clé privée de déchiffrement fonctionnel pour la fonction de distance avec ladite donnée personnelle de référence est générée par application de ladite fonction de distance entre ladite clé maitresse et ladite donnée personnelle de référence.

L'étape (a0) comprend la génération de ladite clé publique de chiffrement fonctionnel à partir de ladite clé maitresse.

L'étape (a0) comprend la génération de ladite clé maitresse ; l'obtention d'au moins une donnée personnelle de référence ; et, pour chaque donnée personnelle de référence obtenue, la génération de la clé privée de déchiffrement fonctionnel pour ladite fonction polynomiale de degré 1 ou 2 paramétrée avec ladite donnée personnelle de référence, de sorte à constituer une base de clés privées de déchiffrement fonctionnel.

Lesdites données personnelles sont des données biométriques, dans lequel l'étape (a) comprend l'obtention de ladite donnée biométrique candidate à partir d'un trait biométrique en utilisant des moyens d'acquisition biométrique du système.

Ladite clé publique de chiffrement fonctionnel est confiée à une autorité contrôlant la mise en oeuvre de l'étape (a).

Ledit système comprend un module matériel de sécurité, l'autorité mettant à disposition du module matériel de sécurité la clé publique de chiffrement fonctionnel pour mettre en oeuvre l'étape (a).

L'étape (a0) comprend le stockage de ladite clé publique de chiffrement fonctionnel dans un module matériel de sécurité de l'autorité pour mise en oeuvre de l'étape (a).

Ledit système comprend un module matériel de sécurité stockant ladite clé privée de déchiffrement fonctionnel pour la fonction polynomiale de degré 1 ou 2 paramétrée avec ladite donnée personnelle de référence et mettant en oeuvre l'étape (b).

L'étape (a0) comprend le stockage de ladite base de clés privées de déchiffrement fonctionnel dans ledit module matériel de sécurité, en particulier en instanciant un binaire avec lesdites clés privées de déchiffrement fonctionnel.

Ledit système comprend un module de traitement de données mettant en oeuvre l'étape (a), la donnée biométrique candidate chiffrée étant transmise au module matériel de sécurité.

Ledit système comprend un module matériel de sécurité (10), l'étape (b) comprenant en outre le traitement par ledit module matériel de sécurité (10) du résultat de la fonction polynomiale de sorte à obtenir une autre donnée représentative du résultat d'une comparaison entre la donnée personnelle candidate et la donnée personnelle de référence.

Ledit module matériel de sécurité est une enclave du module de traitement de données, telle qu'une enclave SGX.

Selon un deuxième aspect, l'invention propose un système de traitement de données biométriques, caractérisé en ce qu'il est configuré pour la mise en oeuvre d'étapes de :

(a) Chiffrement fonctionnel d'une donnée personnelle candidate en utilisant une clé publique de chiffrement fonctionnel ;
(b) Pour au moins une donnée personnelle de référence, déchiffrement fonctionnel de la donnée biométrique candidate chiffrée en utilisant une clé privée de déchiffrement fonctionnel pour une fonction polynomiale de degré 1 ou 2 paramétrée avec ladite donnée personnelle de référence.

Selon un troisième et un quatrième aspects, l'invention propose un produit programme d'ordinateur comprenant des instructions de code pour l'exécution d'un procédé selon le premier aspect de traitement de données biométriques ; et un moyen de stockage lisible par un équipement informatique sur lequel un produit programme d'ordinateur comprend des instructions de code pour l'exécution d'un procédé selon le premier aspect de traitement de données biométriques.

DESCRIPTION DES FIGURES

D'autres caractéristiques, buts et avantages de la présente invention apparaîtront à la lecture de la description détaillée qui va suivre, au regard des figures annexées, données à titre d'exemples non limitatifs et sur lesquelles :

- La figure 1 représente schématiquement un mode de réalisation préféré d'un système pour la mise en oeuvre d'un procédé selon l'invention ;
- La figure 2 illustre les étapes d'un mode de réalisation d'un procédé selon l'invention.

DESCRIPTION DETAILLEE

*Architecture*

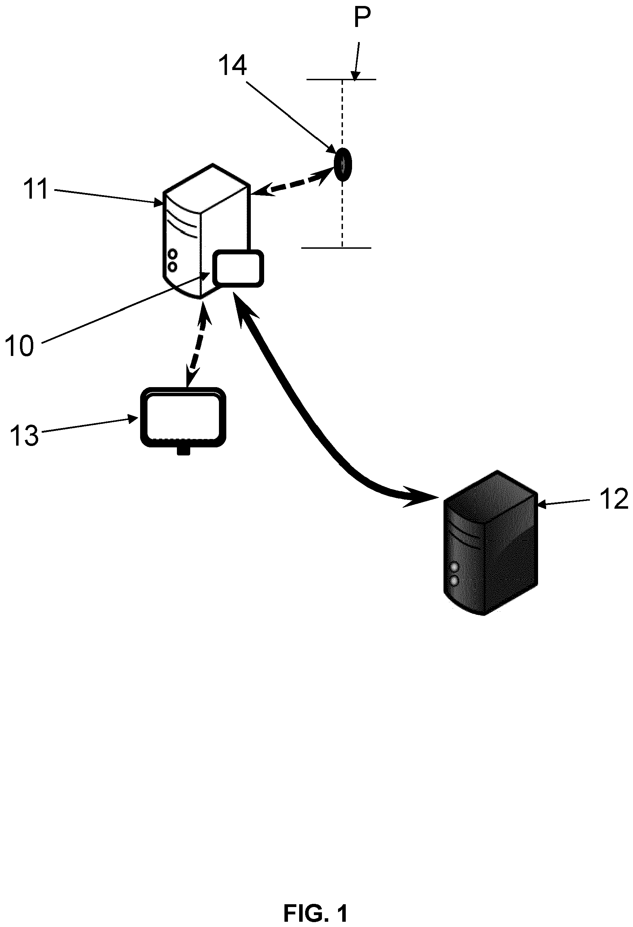

En référence à la **figure 1,** on a représenté schématiquement un système 1 de traitement de données personnelles pour la mise en oeuvre d'un procédé de traitement de données personnelles pour l'authentification/identification d'individus.

Ce système 1 est un équipement détenu et contrôlé par une entité auprès de qui l'authentification/identification doit être effectuée, par exemple une entité gouvernementale, douanière, une société, etc. Dans la suite de la présente description on prendra l'exemple d'un aéroport, le système 1 visant typiquement à contrôler l'accès des passagers d'un vol avant leur embarquement.

Par donnée personnelle, on entend en particulier une donnée biométrique (et on prendra cet exemple dans la suite de la présente description), mais on comprendra qu'il peut s'agir de toute donnée propre à un individu sur la base desquelles on peut authentifier un utilisateur, comme une donnée alphanumérique, une signature, etc.

De manière classique le système 1 comporte un module de traitement de données 11, i.e. un calculateur tel que par exemple un processeur, un microprocesseur, un contrôleur, un microcontrôleur, un FPGA etc. Ce calculateur est adapté pour exécuter des instructions de code pour mettre en oeuvre le cas échéant une partie du traitement de données qui sera présenté ci-après.

Le système 1 comprend également un module de stockage de données 12 (une mémoire, par exemple flash) et avantageusement une interface utilisateur 13 (typiquement un écran), et des moyens d'acquisition biométrique 14 (voir plus loin).

En outre, le système 1 comprend avantageusement au moins un module matériel de sécurité 10, en anglais « Hardware Security Module» ou simplement HSM (en français on trouve également le nom de « Boîte noire transactionnelle » ou BNT). Il s'agit d'un appareil considéré comme inviolable offrant des fonctions cryptographiques, qui peut être par exemple une carte électronique enfichable PCI sur un ordinateur ou un boîtier externe SCSI/IP, mais également une enclave sécurisée du module de traitement de données 11. Le module matériel de sécurité 10 peut être contrôlé par une autorité, voir plus loin.

Le système 1 peut être disposé localement (par exemple dans l'aéroport), mais peut-être séparé en un voire plusieurs serveurs distants hébergeant les composants électroniques (modules 10, 11, 12) connectés aux moyens d'acquisition biométrique 14 qui eux doivent nécessairement rester sur site (au niveau de la gâte pour du contrôle à l'embarquement). Dans l'exemple de la figure 1, le module de stockage 12 est distant.

Dans le mode de réalisation préféré biométrique, le système 1 est capable de générer une donnée biométrique dite candidate à partir d'un trait biométrique d'un individu. Le trait biométrique peut par exemple être la forme du visage, ou un ou plusieurs iris de l'individu. L'extraction de la donnée biométrique est mise en oeuvre par un traitement de l'image du trait biométrique qui dépend de la nature du trait biométrique. Des traitements d'images variés pour extraire des données biométriques sont connus de l'Homme du Métier. A titre d'exemple non limitatif, l'extraction de la donnée biométrique peut comprendre une extraction de points particuliers ou d'une forme du visage dans le cas où l'image est une image du visage de l'individu.

Les moyens d'acquisition biométrique 14 consistent à ce titre typiquement en un capteur d'image, par exemple un appareil photographique numérique ou une caméra numérique, adapté pour acquérir au moins une image d'un trait biométrique d'un individu, voir plus loin.

De manière générale, on aura toujours une donnée personnelle candidate et au moins une donnée personnelle de référence à comparer, si on utilise des données personnelles alphanumériques la donnée candidate peut-être tout simplement saisie sur les moyens 13 ou par exemple obtenue par lecture optique à partir d'une image.

Si le module de stockage de données 12 stocke généralement une base de données personnelles de référence, c'est-à-dire au moins une donnée personnelle « attendue » d'un individu autorisé, par exemple les passagers enregistrés pour le vol, comme l'on verra ce n'est pas nécessairement le cas dans la présente invention, et on pourra se contenter d'une base de clé privées de déchiffrement chacune associée à une donnée personnelle de référence (et à partir de laquelle elle est construite - il n'est pas nécessaire de garder la donnée biométrique de référence ensuite), mais ne permettant pas de remonter à cette donnée personnelle de référence. Cela est par ailleurs très avantageux en termes de taille de stockage des données.

Dans tous les cas chaque donnée personnelle de référence est avantageusement une donnée enregistrée dans un document d'identité de l'individu. Par exemple, la donnée personnelle peut être la donnée biométrique obtenue à partir d'une image du visage figurant sur un document d'identité (par exemple un passeport), ou encore d'une image du visage ou d'au moins un iris de l'individu enregistré dans une puce radiofréquence contenue dans le document.

Comme l'on verra, l'invention se distingue en ce que lesdites clés privées de déchiffrement, et de manière générales toutes les clés cryptographiques qui seront utilisées, sont celles d'un cryptosystème asymétrique dit fonctionnel (FE, Functional Encryption). On a une paire d'un ensemble de clés privées de déchiffrement fonctionnel (une pour chaque donnée biométrique de référence) préférentiellement stockées dans le module matériel de sécurité 10 ou bien la base du module de stockage 12, et d'une clé publique de chiffrement. Le chiffrement fonctionnel est une généralisation du chiffrement asymétrique dans laquelle l'utilisation de la clé privée de déchiffrement sur une donnée chiffrée permet non pas de retrouver la donnée d'origine, mais le résultat de l'application d'une fonction donnée à ladite donnée d'origine, en particulier une fonction polynomiale de degré 1 ou 2, préférentiellement une fonction de distance, et en particulier au moins un produit scalaire comme l'on verra plus loin, c'est-à-dire du chiffrement fonctionnel de type IPFE (inner-product functional encryption). On comprend que le chiffrement fonctionnel « restreint » le résultat du déchiffrement puisqu'on ne peut plus remonter à la donnée d'origine, ce qui va être astucieusement utilisé dans la présente invention.

En termes mathématiques, si on note $c \leftarrow Enc(p_k, x)$ le chiffrement de la donnée x avec la clé publique $p_k$ de chiffrement fonctionnel, et $y \leftarrow Dec(S_k(f), c)$ le déchiffrement du chiffré c avec la clé privée $s_k(f)$ de chiffrement fonctionnel pour la fonction $f$ (ici un produit scalaire), alors $y=f(x)$.

L'homme du métier pourra en outre mettre en oeuvre toute technique connue pour apporter des propriétés de sécurité supplémentaire, par exemple en cachant les entrées.

Dans un mode de réalisation, le système 1 met en œuvre une authentification de l'individu, c'est-à-dire compare la donnée personnelle dite candidate (fraichement acquise sur l'individu dans le cas d'une donnée biométrique, ou sinon simplement demandée à l'individu si c'est une donnée alphanumérique par exemple), à une seule personnelle de référence, censée provenir du même individu, afin de vérifier que l'individu à partir duquel ont été obtenues les deux données est bien le même.

Dans un autre mode de réalisation, le système 1 met en oeuvre une identification de l'individu, c'est-à-dire compare la donnée personnelle candidate à toutes les données personnelles référence de ladite base, afin de déterminer l'identité de l'individu.

Le système 1 peut enfin comprendre des moyens de contrôle d'accès (par exemple une porte automatique P dans la figure 1) commandés en fonction du résultat de l'authentification/identification : si un utilisateur autorisé est reconnu, l'accès est autorisé. Lesdits moyens d'acquisition biométrique 14 peuvent être directement montés sur lesdits moyens de contrôle d'accès.

*Enrôlement*

La base de données personnelles de référence peut avoir été constituée en avance. Par exemple, les passagers peuvent avoir présenté en amont leur document d'identité, de sorte à générer une base stockée dans le module de stockage 12.

La présente invention propose d'utiliser un chiffrement fonctionnel pour une fonction polynomiale de degré 1 ou 2 paramétrée avec une donnée personnelle de référence. On comprend ainsi qu'on a autant de fonctions différentes que de données personnelles de référence. De manière préférée, ladite fonction polynomiale paramétrée avec une donnée personnelle de référence est une fonction « de distance avec la donnée personnelle de référence », permettant ainsi de comparer l'entrée de la fonction avec la donnée personnelle de référence, et préférentiellement la fonction « produit scalaire avec la donnée personnelle de référence », même si on pourra utiliser d'autres fonctions de distance, par exemple la distance euclidienne qui est de degré 2.

Ainsi, si l'on prend comme donnée d'entrée une donnée à comparer avec la donnée personnelle de référence, le résultat du déchiffrement fonctionnel de cette donnée chiffrée est directement le résultat (en clair) de l'application à cette donnée d'entrée de la fonction polynomiale de degré 1 ou 2 paramétrée avec la donnée personnelle de référence, i.e. la distance de cette donnée avec ladite donnée personnelle de référence. Il suffit ainsi d'avoir plusieurs clés privées de déchiffrement chacune associée à une donnée personnelle de référence ($s_k1$, $s_k2$...) afin d'être en mesure de calculer la fonction polynomiale pour chaque donnée personnelle de référence, i.e. des distances avec toutes ces données personnelles de référence comme autant de fonctions différentes.

En notant :

- *$ref_i$* la i-eme donnée personnelle de référence,
- *can* une donnée personnelle candidate,
- *$f_i = f_{ref_i}$* ladite fonction polynomiale de degré 1 ou 2 paramétrée avec *$ref_i$*,
- *$s_k i = s_k(f_i)$* la clé de déchiffrement fonctionnel pour la fonction *$f_i$*, alors si la fonction polynomiale est une fonction de distance on a :

$$Dec(s_k i, Enc(p_k, can)) = f_i(can) = d(can, ref_i).$$

De manière préférée, la ou les clés privées de déchiffrement associées à chaque donnée personnelle de référence, sont générées à la volée à partir de ladite donnée personnelle de référence, de sorte qu'on ne stocke pas les données personnelles de référence (ce qui évite tout risque de divulgation, et est en outre très économique en termes de taille de stockage), et on constitue en direct une base des clés privées de déchiffrement plutôt que ladite base de données personnelles de référence. Par exemple, chaque clé privée de déchiffrement est directement générée à la lecture du document d'identité correspondant.

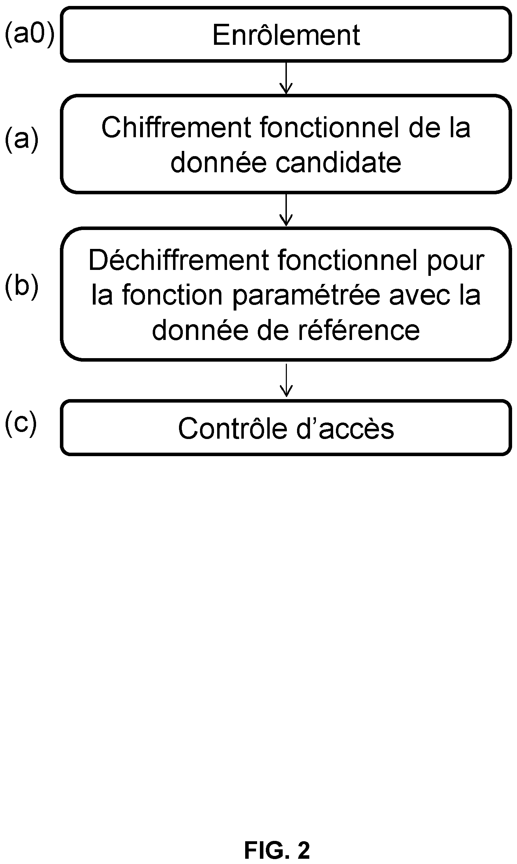

A ce titre, en référence à la **figure 2,** le procédé commence préférentiellement par une étape (a0), dite d'enrôlement, de génération de ladite clé privée de déchiffrement fonctionnel pour la fonction polynomiale de degré 1 ou 2 paramétrée avec ladite donnée personnelle de référence, à partir d'une clé maitresse et de ladite donnée personnelle de référence.

En effet, le chiffrement fonctionnel prévoit cette possibilité d'utiliser une clé maitresse secrète (master key), et dans le cas d'une fonction de distance ladite clé privée de déchiffrement fonctionnel pour la fonction de distance avec ladite donnée personnelle de référence est typiquement générée comme la distance (obtenue par l'application de ladite fonction de distance) entre ladite clé maitresse et ladite donnée personnelle de référence, e.g. par au moins un produit scalaire entre ladite clé maitresse et ladite donnée personnelle de référence si ladite fonction est le produit scalaire.

L'étape (a0) peut également comprend la génération de ladite clé publique de chiffrement fonctionnel à partir de la même clé maitresse, ce qui permet d'avoir des clés publique et privées associées.

On peut avoir une clé maitresse unique stockée de manière très sécurisée, par exemple uniquement dans le module matériel de sécurité 10, mais alternativement on a une clé maitresse par « session », c'est-à-dire par groupe d'identifications/authentifications. Par exemple, dans le cas de contrôle de passagers avant embarquement, on a une clé maitresse par vol, qui peut être tirée dans une liste, généré aléatoirement, etc.

Ainsi, de manière particulièrement préférée l'étape (a0) comprend la génération de ladite clé maitresse ; l'obtention d'au moins une donnée personnelle de référence ; et, pour chaque donnée personnelle de référence obtenue, la génération de la clé privée de déchiffrement fonctionnel pour la fonction polynomiale de degré 1 ou 2 paramétrée avec ladite donnée personnelle de référence, de sorte à constituer une base de clés privées de déchiffrement fonctionnel. La clé publique est également générée en même temps.

Pour limiter l'utilisation de la clé publique et/ou des clés privées, elle(s) est(sont) avantageusement confiée(s) à une autorité (par exemple gouvernementale), et/ou stockée(s) dans l'étape (a0) dans un (ou plusieurs) module matériel de sécurité 10 (qui peut donc être un module matériel de sécurité 10 contrôlé par ladite autorité), bien qu'on puisse comme expliqué simplement utiliser le module de stockage 12 en particulier pour les clés privées. Préférentiellement et comme l'on verra, d'un côté la clé publique est confiée à une autorité et de l'autre côté les clés privées sont stockées dans le module matériel de sécurité 10 (en instanciant un binaire avec les clé privées), que l'autorité contrôle via la clé publique.

*Procédé de traitement de données personnelles*

Le procédé en lui-même commence par une étape (a) de chiffrement fonctionnel d'une donnée personnelle candidate en utilisant ladite clé publique de chiffrement fonctionnel.

Il est important de comprendre que si l'enrôlement peut être mise en oeuvre bien avant l'authentification/identification en elle-même, dans le cas biométrique la donnée candidate doit être obtenue au pire quelques minutes avant, pour garantir la « fraicheur » de cette donnée candidate.

La clé publique de chiffrement fonctionnel est préférentiellement confiée à une autorité pour que cette dernière puisse contrôler la mise en oeuvre de l'étape (a). Cela est assez paradoxal car cette clé reste une clé publique (et non une clé privée) qui seule ne permet pas de déchiffrer quoi que ce soit, mais comme on expliquera plus loin le présent procédé se distingue en ce qu'il possède une clé publique unique et de nombreuses clés privées, plutôt que l'inverse, d'où le fait qu'il peut être intéressant de protéger en particulier cette clé publique pour prévenir toute utilisation à dessein par un tiers qui essayerait d'avoir des informations sur ladite fonction polynomiale. Ainsi ce contrôle par une autorité peut être exercé au moyen du module matériel de sécurité 10, i.e. c'est l'autorité qui met la clé publique à disposition du module 10 pour mettre en oeuvre de manière l'étape (a), ou bien c'est un module de sécurité 10 de l'autorité qui stocke directement la clé publique de déchiffrement fonctionnel pour mise en oeuvre de l'étape (a).

Il reste bien entendu tout à fait possible en complément ou alternativement de confier les clés privées de déchiffrement fonctionnel à cette autorité.

L'objectif de confier la clé publique (plutôt que les clés privées) est également que l'autorité puisse vérifier avant son utilisation que la personne qui soumet la donnée candidate fraiche est bien une personne physique.

Comme expliqué, le système 1 comprend en outre des moyens d'acquisition biométrique 14 pour l'obtention de ladite donnée biométrique candidate. Généralement, la donnée biométrique candidate est générée par le module de traitement de données 11 à partir d'un trait biométrique fourni par les moyens d'acquisition biométrique 14, mais les moyens d'acquisition biométrique 14 peuvent comprendre leurs propres moyens de traitement et par exemple prendre la forme d'un dispositif automatique fourni par les autorités de contrôle (dans l'aéroport) pour extraire la donnée biométrique candidate. Un tel dispositif peut le cas échéant chiffrer à la volée la donnée biométrique candidate, directement avantageusement avec la clé publique de chiffrement fonctionnel. Ainsi, les données biométrique candidates sont elles aussi complètement protégées.

De façon préférée les moyens d'acquisition biométrique 14 sont capable de détecter le vivant, de sorte à s'assurer que la donnée biométrique candidate est issue d'un trait « réel ».

Dans le cas où les moyens 14 et le reste du système sont distants, la communication entre les deux peut être elle-même chiffrée.

Le présent procédé se distingue comme expliqué de manière très originale en ce qu'il n'y a aucune comparaison réellement effectuée entre la donnée personnelle candidate et les données personnelles de référence. Pourtant, on obtient un résultat de cette comparaison, et ce sans que les données personnelles n'aient été une seule fois accessible.

En effet, dans l'étape (b) suivante, on se contente de déchiffrer de manière fonctionnelle la donnée biométrique candidate chiffrée en utilisant la clé privée de déchiffrement fonctionnel pour la fonction polynomiale de degré 1 ou 2 paramétrée avec ladite donnée personnelle de référence : grâce aux propriétés du chiffrement fonctionnel, le résultat n'est pas la donnée biométrique candidate en clair, mais directement le résultat de l'application à la donnée biométrique candidate de la fonction polynomiale de degré 1 ou 2 paramétrée avec la donnée personnelle de référence, par exemple leur produit scalaire, ce qui est bien le résultat de leur comparaison.

On remarque que baser la clé privée de déchiffrement sur la donnée de référence et non pas la donnée candidate (i.e. Il s'agit bien d'une clé de déchiffrement fonctionnel pour la fonction polynomiale de degré 1 ou 2 paramétrée avec la donnée personnelle de référence, et non avec la donnée personnelle candidate) est contre-intuitif, car cela oblige à avoir autant de clés privées de déchiffrement que de données de référence alors qu'habituellement la clé publique est utilisée pour chiffrer les données de référence, ce qui oblige à calculer la clé privé fonctionnelle associée à chaque donnée candidate pour effectuer la comparaison associée, mais cette solution s'avère très fiable et permet d'éliminer les risques et la taille élevée de stockage inhérents au stockage d'une base de données personnelles de référence.

Cette étape (b) est mise en oeuvre pour au moins une donnée personnelle de référence, avantageusement pour chaque donnée personnelle de référence, i.e. si l'on a une base de clés privées de déchiffrement fonctionnel on déchiffre indépendant le chiffré de la donnée personnelle candidate autant de fois qu'on a de clés privées dans la base, le résultat dudit déchiffrement est ainsi le résultat de l'application à la donnée biométrique candidate de chaque fonction polynomiale de degré 1 ou 2 paramétrée avec une donnée personnelle de référence, i.e. le produit scalaire avec chaque donnée personnelle de référence dans le mode de réalisation préféré.

Cette étape (b) est typiquement mise en œuvre par le module matériel de sécurité 10 si c'est lui qui stocke les clés privées.

L'étape (b) peut en outre comprendre le traitement du résultat de la fonction polynomiale (i.e. le résultat du déchiffrement de la donnée personnelle candidate chiffrée) de sorte à obtenir une autre donnée, en particulier une donnée représentative du résultat de ladite comparaison. De manière générale, cette donnée représentative du résultat de ladite comparaison est un résultat d'identification/authentification de l'individu, i.e. typiquement un booléen d'appartenance à la base.

En effet, l'individu est authentifié si le déchiffrement révèle un taux de similarité entre la donnée candidate et la donnée de référence « cible » excédant un certain seuil, dont la définition peut dépendre de la distance calculée. Dans un tel mode de réalisation, le système 1 (et plus spécifiquement le module matériel de sécurité 10 si c'est lui qui fait ce traitement, ce peut tout à fait être le module 11) peut renvoyer le booléen selon si le seuil est dépassé, ou bien directement le taux de similarité (ou bien un autre score calculé à partir dudit taux de similarité, par exemple un « niveau » discret de similitude pour limiter la quantité d'informations, ou bien une version normalisée, voire légèrement bruitée).

Dans le cas d'une identification, le système 1 peut renvoyer par exemple les différents taux de similitude/scores associés à chaque donnée de référence, ou les identifiants de la ou les données de référence pour lesquels le taux de similitude dépasse ledit seuil.

Pour d'autres types de données personnelles, par exemple alphanumériques, la donnée de référence et la donnée candidate doivent être identiques, de sorte qu'on peut renvoyer directement un booléen indiquant si c'est le cas.

De manière générale, n'importe quelles données représentatives du résultat de la comparaison pourront être utilisées comme données de sortie. A noter que ladite donnée représentative du résultat de la comparaison peut être directement ce résultat de la comparaison (par exemple la valeur de la distance).

Dans le mode de réalisation préféré dans lequel un module matériel de sécurité 10 stocke la clé publique et/ou les clés privées et met en oeuvre respectivement l'étape (a) et/ou l'étape (b), l'homme du métier pourra s'inspirer de l'architecture IRON utilisant le système SGX pour permettre de faire facilement et de manière sécurisée tous les calculs précédemment évoqués (i.e. distances, normalisations, seuillages, etc.), voir le document *Ben Fisch, Dhinakaran Vinayagamurthy, Dan Boneh, Sergey Gorbunov: IRON: Functional Encryption using Intel SGX,* qui décrit comment l'attestation d'une fonction (instanciée par son binaire) est signée pour s'assurer que son exécution se limite à cette fonction particulière. Dans IRON, les données opérandes de la fonction sont chiffrées sous une clé publique classique dont la clé privée de déchiffrement devient disponible sur présentation de la signature valide cette attestation locale.

Ici l'originalité est que c'est préférentiellement l'inverse : c'est la clé publique de chiffrement que l'autorité peut rendre disponible ou utiliser lorsque des conditions sont respectées, par exemple lorsque les autres contrôles liés à l'identification sont passés (contrôle d'un document d'identité, du vivant lors de l'acquisition de la donnée personnelle candidate, etc.), pour contrôler la mise en oeuvre de l'étape (a).

En effet, la clé publique permet de contrôler le chiffrement de la donnée personnelle candidate et donc l'utilisation de chaque clé privée de déchiffrement. Plus précisément, si la clé publique est confiée à une autorité, sa mise en oeuvre pour le chiffrement est réalisée sous son contrôle dans un premier module 10. En parallèle, on peut instancier le binaire avec les clés privées de chiffrement dans un deuxième module 10, et requérir auprès de l'autorité non pas les clés privées de déchiffrement mais la clé publique de chiffrement. Si les conditions susmentionnées sont vérifiées, l'autorité met à disposition la clé publique du premier module 10 et ce dernier peut chiffrer la donnée personnelle candidate (étape (a)) et l'envoyer au deuxième module 10 pour exécuter le binaire (étape (b)), de sorte à obtenir chaque résultat, par exemple chaque distance, et le cas échéant ladite autre donnée représentative du résultat de ladite comparaison (son calcul après le ou les déchiffrements peut être défini dans le binaire) de manière totalement sécurisée.

SGX permet en effet :

- la création d'une enclave sécurisée isolée en confidentialité et en intégrité des autres processus tournant sur le même module de traitement de données ; notamment de l'OS sous-jacent,
- l'attestation que des calculs ont bien été effectués dans l'enclave sécurisée donnée,
- la possibilité de préserver le code et les données de l'enclave sécurisée.

Enfin, le procédé comprend avantageusement en outre une étape (c) de mise en oeuvre d'un contrôle d'accès en fonction du résultat du déchiffrement fonctionnel de la donnée biométrique candidate chiffrée, i.e. de ladite donnée représentative du résultat de ladite comparaison. En d'autres termes, si l'individu auquel appartient la donnée personnelle candidate a été correctement identifié/authentifié, il est « autorisé » et d'autres actions comme l'ouverture de la porte automatique P peuvent survenir.

*Produit programme d'ordinateur*

Selon un troisième et un quatrième aspects, l'invention concerne un produit programme d'ordinateur comprenant des instructions de code pour l'exécution (en particulier sur le module traitement de données 11 et/ou le module matériel de sécurité 10 du système 1) d'un procédé selon le premier aspect de l'invention, ainsi que des moyens de stockage lisibles par un équipement informatique (un module de stockage de données 12 du système 1 et/ou un espace mémoire du module matériel de sécurité 10) sur lequel on trouve ce produit programme d'ordinateur.

**Revendications**

1. Procédé de traitement de données personnelles, **caractérisé en ce que** qu'il comprend la mise en oeuvre par un système (1) d'étapes de :

   (a) Chiffrement fonctionnel d'une donnée personnelle candidate en utilisant une clé publique de chiffrement fonctionnel ;
   (b) Pour au moins une donnée personnelle de référence, déchiffrement fonctionnel de la donnée biométrique candidate chiffrée en utilisant une clé privée de déchiffrement fonctionnel pour une fonction polynomiale de degré 1 ou 2 paramétrée avec ladite donnée personnelle de référence.

2. Procédé selon la revendication 1, dans lequel ladite une fonction polynomiale de degré 1 ou 2 paramétrée avec ladite donnée personnelle de référence est une fonction de distance avec ladite donnée personnelle de référence, en particulier un produit scalaire avec ladite donnée personnelle de référence.

3. Procédé selon l'une des revendications 1 et 2, comprenant une étape (a0) de génération de ladite clé privée de déchiffrement fonctionnel pour ladite fonction polynomiale de degré 1 ou 2 paramétrée avec ladite donnée personnelle de référence, à partir d'une clé maitresse et de ladite donnée personnelle de référence.

4. Procédé selon les revendications 2 et 3 en combinaison, dans lequel ladite clé privée de déchiffrement fonctionnel pour la fonction de distance avec ladite donnée personnelle de référence est générée par application de ladite fonction de distance entre ladite clé maitresse et ladite donnée personnelle de référence.

5. Procédé selon l'une des revendications 3 et 4, dans lequel l'étape (a0) comprend la génération de ladite clé publique de chiffrement fonctionnel à partir de ladite clé maitresse.

6. Procédé selon l'une des revendications 3 à 5, dans lequel l'étape (a0) comprend la génération de ladite clé maitresse ; l'obtention d'au moins une donnée personnelle de référence ; et, pour chaque donnée personnelle de référence obtenue, la génération de la clé privée de déchiffrement fonctionnel pour ladite fonction polynomiale de degré 1 ou 2 paramétrée avec ladite donnée personnelle de référence, de sorte à constituer une base de clés privées de déchiffrement fonctionnel.

7. Procédé selon l'une des revendications 1 à 6, dans laquelle lesdites données personnelles sont des données biométriques, dans lequel l'étape (a) comprend l'obtention de ladite donnée biométrique candidate à partir d'un trait biométrique en utilisant des moyens d'acquisition biométrique (14) du système (1).

8. Procédé selon l'une des revendications 1 à 7, dans laquelle ladite clé publique de chiffrement fonctionnel est confiée à une autorité contrôlant la mise en oeuvre de l'étape (a).

9. Procédé selon la revendication 8, dans lequel ledit système (1) comprend un module matériel de sécurité (10), ladite autorité mettant à disposition du module matériel de sécurité (10) la clé publique de chiffrement fonctionnel pour mettre en oeuvre l'étape (a).

10. Procédé selon l'une des revendications 1 à 9, dans lequel ledit système (1) comprend un module matériel de sécurité (10) stockant ladite clé privée de déchiffrement fonctionnel pour la fonction polynomiale de degré 1 ou 2 paramétrée avec ladite donnée personnelle de référence et mettant en oeuvre l'étape (b).

11. Procédé selon les revendications 10 et 6 en combinaison, dans lequel l'étape (a0) comprend le stockage de ladite base de clés privées de déchiffrement fonctionnel dans ledit module matériel de sécurité (10), en particulier en instanciant un binaire avec lesdites clés privées de déchiffrement fonctionnel.

12. Procédé selon l'une des revendications 1 à 11, dans lequel ledit système (1) comprend un module matériel de sécurité (10), l'étape (b) comprenant en outre le traitement par ledit module matériel de sécurité (10) du résultat de la fonction polynomiale de sorte à obtenir une autre donnée représentative du résultat d'une comparaison entre la donnée personnelle candidate et la donnée personnelle de référence.

13. Système de traitement de données biométriques, **caractérisé en ce qu'**il est configuré pour la mise en oeuvre d'étapes de :

(a) Chiffrement fonctionnel d'une donnée personnelle candidate en utilisant une clé publique de chiffrement fonctionnel ;
(b) Pour au moins une donnée personnelle de référence, déchiffrement fonctionnel de la donnée biométrique candidate chiffrée en utilisant une clé privée de déchiffrement fonctionnel pour une fonction polynomiale de degré 1 ou 2 paramétrée avec ladite donnée personnelle de référence.

14. Produit programme d'ordinateur comprenant des instructions de code pour l'exécution d'un procédé selon l'une des revendications 1 à 12 de traitement de données biométriques, lorsque ledit procédé est exécuté sur un ordinateur.

15. Moyen de stockage lisible par un équipement informatique sur lequel un produit programme d'ordinateur comprend des instructions de code pour l'exécution d'un procédé selon l'une des revendications 1 à 12 de traitement de données biométriques.

**FIG. 1**

(a0) | Enrôlement |

(a) | Chiffrement fonctionnel de la donnée candidate |

(b) | Déchiffrement fonctionnel pour la fonction paramétrée avec la donnée de référence |

(c) | Contrôle d'accès |

**FIG. 2**

Europäisches
Patentamt

European
Patent Office

Office européen
des brevets

**RAPPORT DE RECHERCHE EUROPEENNE**

Numéro de la demande

EP 22 17 4280

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | AMBRONA MIGUEL ET AL: "Controlled Functional Encryption Revisited: Multi-Authority Extensions and Efficient Schemes for Quadratic Functions", PROCEEDINGS ON PRIVACY ENHANCING TECHNOLOGIES, vol. 2021, no. 1, 9 novembre 2020 (2020-11-09), pages 21-42, XP055868271, DOI: 10.2478/popets-2021-0003 | 1-3, 13-15 | INV. H04L9/30 H04L9/08 |
| Y | * alinéa [0004] - alinéa [0005] * ----- | 4-12 | |
| Y | SAM KIM ET AL: "Function-Hiding Inner Product Encryption is Practical", IACR, INTERNATIONAL ASSOCIATION FOR CRYPTOLOGIC RESEARCH , vol. 20180613:204744 13 juin 2018 (2018-06-13), pages 1-34, XP061025709, Extrait de l'Internet: URL:http://eprint.iacr.org/2016/440.pdf [extrait le 2018-06-13] * alinéa [04.1] * ----- | 4,5 | DOMAINES TECHNIQUES RECHERCHES (IPC) H04L |
| Y | JEON SEONG-YUN ET AL: "Acceleration of Inner-Pairing Product Operation for Secure Biometric Verification", SENSORS, vol. 21, no. 8, 19 avril 2021 (2021-04-19) , page 2859, XP055886848, DOI: 10.3390/s21082859 * alinéas [0002] - [0004] - alinéa [0006] * * figures 1, 5 * ----- -/-- | 6-12 | |

Le présent rapport a été établi pour toutes les revendications

| Lieu de la recherche | Date d'achèvement de la recherche | Examinateur |
|---|---|---|
| Munich | 5 octobre 2022 | Bec, Thierry |

EPO FORM 1503 03.82 (P04C02)

Europäisches
Patentamt

European
Patent Office

Office européen
des brevets

## RAPPORT DE RECHERCHE EUROPEENNE

Numéro de la demande

**EP 22 17 4280**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | MICHEL ABDALLA ET AL: "Inner-Product Functional Encryption with Fine-Grained Access Control", IACR, INTERNATIONAL ASSOCIATION FOR CRYPTOLOGIC RESEARCH , vol. 20200518:070654 16 mai 2020 (2020-05-16), pages 1-48, XP061035862, Extrait de l'Internet: URL:http://eprint.iacr.org/2020/577.pdf [extrait le 2020-05-16] * alinéa [0003] * ----- | 1-15 | |
| A | ZHOU KAI ET AL: "ExpSOS: Secure and Verifiable Outsourcing of Exponentiation Operations for Mobile Cloud Computing", IEEE TRANSACTIONS ON INFORMATION FORENSICS AND SECURITY, IEEE, USA, vol. 12, no. 11, 1 novembre 2017 (2017-11-01), pages 2518-2531, XP011660590, ISSN: 1556-6013, DOI: 10.1109/TIFS.2017.2710941 [extrait le 2017-07-25] * alinéa [00II] – alinéa [0III] * ----- | 1-15 | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| Munich | 5 octobre 2022 | Bec, Thierry |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................
& : membre de la même famille, document correspondant

EPO FORM 1503 03.82 (P04C02)

page 2 de 2